# EUROPEAN PATENT APPLICATION

(11) **EP 4 303 503 A1**
(43) Date of publication of application: **10.01.2024**
(21) Application number: 23183113.2
(22) Date of filing: 03.07.2023
(51) Int. Cl.: F25B 5/02, F25B 47/02, F25B 49/02

(54) **MULTI-COMPARTMENT TRANSPORT REFRIGERATION SYSTEM**

(30) Priority: 05.07.2022 US 202263367668 P
(71) Applicant: Carrier Corporation, Palm Beach Gardens, FL 33418 (US)
(72) Inventor: SAROKA, Mary, Syracuse (US); CORLEY, Travis, Syracuse (US); KOSAKOWSKI, Chad, Syracuse (US)
(74) Representative: Dehns

(57) **Abstract**

A multi-compartment transport refrigeration system (10) includes a cooling circuit and a hot gas flow path (200). The hot gas flow path includes an inlet located on the cooling circuit between a compressor (20) and a heat rejection heat exchanger valve (27); a first outlet located between a first evaporator expansion device (80) and a first evaporator (40) inlet; a second outlet located between a second evaporator expansion device (82) and a second evaporator (50) inlet; a proportional valve (210) downstream of the hot gas flow path inlet; a first evaporator valve (240) located between the proportional valve (210) and the first outlet; and a second evaporator (250) valve located between the proportional valve (210) and the second outlet.

## Description

Embodiments relate generally to transport refrigeration systems, and more particularly to multi-compartment transport refrigeration systems.

The refrigerated container of a truck trailer requires a refrigeration unit for maintaining a desired temperature environment within the interior volume of the container. A wide variety of products, ranging for example, from freshly picked produce to deep frozen seafood, are commonly shipped in refrigerated truck trailers and other refrigerated freight containers. To facilitate shipment of a variety of products under different temperature conditions, some truck trailer containers are compartmentalized into two or more separate compartments each of which will typically have a door that opens directly to the exterior of the trailer. The container may be compartmentalized into a pair of side-by-side axially extending compartments, or into two or more back-to-back compartments, or a combination thereof.

Conventional transport refrigeration units used in connection with compartmentalized refrigerated containers of truck trailers include a refrigerant compressor, a condenser, a main evaporator and one or more remote evaporators connected via appropriate refrigerant lines in a closed refrigerant flow circuit. The refrigeration unit must have sufficient refrigeration capacity to maintain the perishable product stored within the various compartments of the container at the particular desired compartment temperatures over a wide range of outdoor ambient temperatures and load conditions.

In addition to the afore-mentioned main evaporator, one or more remote evaporators, typically one for each additional compartment aft of the forward most compartment, are provided to refrigerate the air or other gases within each of the separate aft compartments. The remote evaporators may be mounted to the ceiling of the respective compartments or mounted to one of the partition walls of the compartment, as desired. The remote evaporators are generally disposed in the refrigerant circulation circuit in parallel with the main evaporator. Typically, a valve is disposed in the refrigerant circulation circuit upstream of each of the remote evaporators in operation with a system controller so that each remote evaporator may be independently and selectively open and closed to refrigerant flow in response to the cooling demand of the respective compartment with which the respective remote evaporator is operatively associated.

In some cases, the perishable cargo is transported in environments having temperatures that are below what is required for the perishable cargo so the transport refrigeration system must also have the capacity to provide heat in order to maintain the desired temperature. Further, icing can occur on the evaporator, decreasing the efficiency of the refrigeration system. Improved methods of energy efficient temperature control are desired.

A first aspect of the present invention provides a multi-compartment transport refrigeration system that includes a cooling circuit and a hot gas flow path. The cooling circuit includes a compressor having an inlet port and a discharge port; a heat rejection heat exchanger valve downstream of the compressor discharge port; a heat rejection heat exchanger downstream of the heat rejection heat exchanger valve; a first evaporator expansion device downstream of the heat rejection heat exchanger; a first evaporator having an inlet coupled to the first evaporator expansion device and an outlet coupled to a compressor inlet path, the compressor inlet path coupled to the compressor inlet port; a second evaporator expansion device downstream of the heat rejection heat exchanger; and a second evaporator having an inlet coupled to the second evaporator expansion device and an outlet coupled to the compressor inlet path. The hot gas flow path includes an inlet located on the cooling circuit between the compressor and the heat rejection heat exchanger valve; a first outlet located between the first evaporator expansion device and the first evaporator inlet; a second outlet located between the second evaporator expansion device and the second evaporator inlet; a proportional valve downstream of the hot gas flow path inlet; a first evaporator valve located downstream of the proportional valve, a first drain pan inlet located downstream of the first evaporator valve and upstream relative to the first outlet; a second evaporator valve located downstream of the proportional valve, a second drain pan inlet located downstream of the second evaporator valve and upstream relative to the second outlet.

The multi-compartment transport refrigeration system may include a controller configured to control the heat rejection heat exchanger valve, the proportional valve, the first evaporator valve, the second evaporator valve, the first evaporator expansion device, and the second evaporator expansion device to regulate hot gas flow to the first evaporator and the second evaporator.

The controller may be configured to control opening the proportional valve to an amount less than 100% in response to an operating parameter of the refrigeration system

The controller may be configured to control the amount of opening of the proportional valve in response to icing on the first evaporator, the second evaporator, or both.

The controller may be configured to control the amount of opening of the proportional valve in response to a temperature lower than a set point in a first compartment.

The controller may be configured to regulate hot gas flow to provide defrosting to the first evaporator associated with a first compartment and cooling to a second compartment associated with the second evaporator.

The controller may be configured to regulate hot gas flow to provide heat to a first compartment and cooling to a second compartment.

The controller may be configured to regulate hot gas flow to provide heat to a first compartment and defrosting to the second evaporator associated with a second compartment.

The controller may be configured to regulate hot gas flow to provide defrosting to a first evaporator associated with a first compartment and defrosting to a second evaporator associated with a second compartment.

The hot gas flow path may contact a drain pan associated with the first evaporator, a drain pan associated with the second evaporator, or may contact both drain pans.

A second aspect of the present invention provides a method of providing a hot gas flow to a single evaporator in a multiple evaporator refrigeration system. The method includes opening a proportional valve in an amount less than 100% to allow a portion of a total hot gas amount to enter a hot gas flow path; closing an evaporative expansion device associated with the single evaporator; opening a valve along the hot gas flow path that permits flow of the hot gas to the single evaporator and closing any valves along the hot gas flow path that lead to other evaporators.

The amount less than 100% may be an amount sufficient to defrost the single evaporator and the method may further comprise halting operation of a fan associated with the single evaporator.

The amount less than 100% may be an amount sufficient to heat a compartment associated with the single evaporator and the method may further comprise operating a fan associated with the single evaporator.

The other evaporators may be operating in a cooling mode.

The other evaporators may be operating in a mix of cooling and defrost modes.

These and other advantages and features will become more apparent from the following description taken in conjunction with the drawings.

The foregoing and other features, and advantages of the invention are apparent from the following detailed description taken in conjunction with the accompanying drawings in which:
FIG. 1 is a perspective view, partly in section, of a refrigerated truck trailer having a compartmentalized container and equipped with a transport refrigeration unit having multiple evaporators;
FIG. 2 is a schematic representation of a multiple evaporator transport refrigeration unit;
FIGS. 3-5 are schematic representations of a multiple evaporator transport refrigeration unit showing refrigerant flow under different conditions; and
FIG. 6 is a flowchart of a method for controlling the multi-compartment refrigeration system.

The detailed description explains embodiments of the invention, together with advantages and features, by way of example with reference to the drawings.

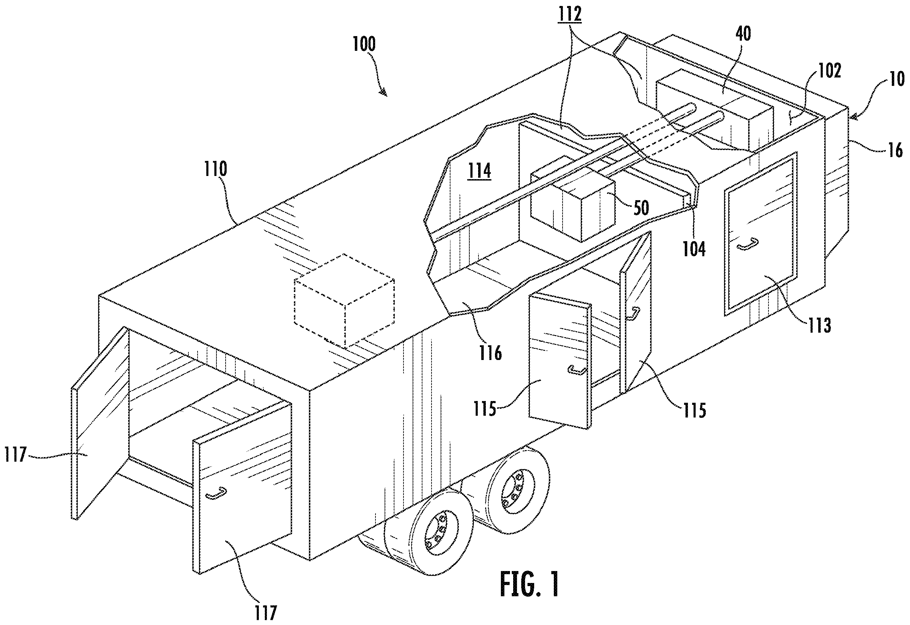

Referring now to FIG. 1, a truck trailer 100 having a refrigerated container 110 subdivided, i.e., compartmentalized, by internal partition wall 104 into a forward cargo compartment 112, and an aft cargo compartment 114 is shown. The cargo compartments 112 and 114 have access doors 113, 115 and 117, respectively, which open directly to the exterior of the truck trailer to facilitate loading of product into the cargo compartments 112 and 114. The container 100 is equipped with a transport refrigeration system 10 for regulating and maintaining within each of the cargo compartments 112 and 114 a desired storage temperature range selected for the product being shipped therein. Although embodiments will be described herein with reference to the two compartment refrigerated container, illustrated in FIG. 1, it is to be understood that embodiments may also be used in connection with truck trailers having compartmentalized containers with the cargo compartments arranged otherwise including those with more than two compartments, and also in connection with other refrigerated transport vessels, including for example refrigerated container of a truck, or a refrigerated freight container of compartmentalized design for transporting perishable product by ship, rail and/or road transport.

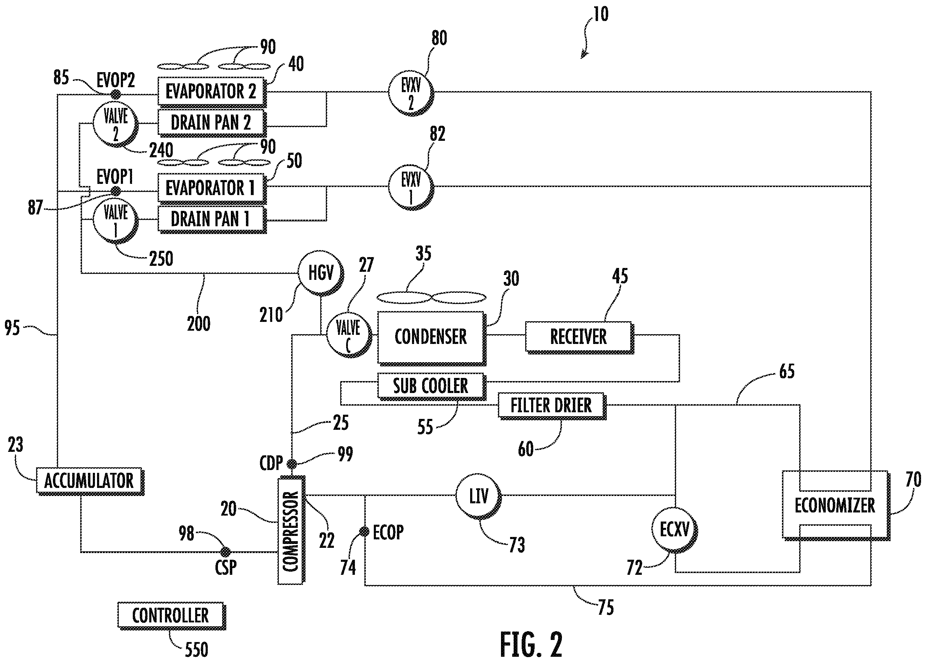

Transport refrigeration system 10 includes a cooling circuit and a hot gas flow path. The cooling circuit includes a main evaporator 40, one or more remote evaporators 50, and a heat rejecting heat exchanger. Each of the evaporators 40, 50 may include a conventional finned tube coil heat exchanger and a drain pan. The transport refrigeration system 10 may be mounted as in conventional practice to an exterior wall of the truck trailer 100, for example the front wall 102 thereof, with the compressor 20 and the heat rejecting heat exchanger 30 (FIG. 2) disposed externally of the refrigerated container 110 in a housing 16.

Compressor 20 may be any type of compressor such as a scroll compressor, reciprocating compressor, or screw compressors. The compressor 20, and typically other components of the transport refrigeration unit, is powered during transit by a prime mover, either through a direct mechanical coupling or a belt drive. Alternatively, the transport refrigeration unit may be electrically powered (e.g., using an alternating current (AC) synchronous generator that generates AC power). The generated AC power is typically used to power an electric motor for driving the refrigerant compressor, and other components of the transport refrigeration unit. In a different electrically powered transport refrigeration unit, the AC generator may be replaced with a high voltage, direct current (HV DC) battery pack and power electronics to provide power to the loads. Alternatively, a fuel cell may provide power to the loads.

FIG. 2 is a schematic representation of an exemplary embodiment of the multiple evaporator transport refrigeration unit 10. In a cooling circuit, high temperature, high pressure refrigerant vapor exits a discharge port 99 of the compressor 20 then moves through flow path 25, which includes heat rejection heat exchanger valve 27, to a heat rejecting heat exchanger 30 (e.g., condenser or gas cooler), which includes a plurality of condenser coil fins and tubes, which receive air, typically blown by a heat rejecting heat exchanger fan 35. By removing latent heat through this step, the refrigerant condenses and flows to the receiver 45 that provides storage for excess liquid refrigerant during low temperature operation. From the receiver 45, the refrigerant flows to a subcooler 55, which increases the refrigerant subcooling. Sub cooler 55 may be positioned adjacent heat rejecting heat exchanger 30 and cooled by air flow from the heat rejecting heat exchanger fan 35. A filter-drier 60 keeps the refrigerant clean and dry, and outlets refrigerant to a first refrigerant flow path 65 of an economizer heat exchanger 70, which increases the refrigerant subcooling. Economizer heat exchanger 70 may be a plate-type heat exchanger, providing refrigerant to refrigerant heat exchange between a first refrigerant flow path 65 and second refrigerant flow path 75.

From the first refrigerant flow path 65, refrigerant flows from the economizer heat exchanger 70 to evaporator expansion devices 80 and 82, connected in parallel with the first refrigerant flow path 65. Any condensation collects in the respective drain pan. Evaporator expansion devices 80 and 82, are associated with evaporators 40 and 50 respectively, to control ingress of refrigerant to the respective evaporators 40 and 50. Any condensation formed in an evaporator collects in the respective drain pan. The evaporator expansion devices 80 and 82 are electronic evaporator expansion devices controlled by a controller 550. It is understood that controller 550 may be a single device that controls the evaporator expansion devices 80 and 82 or multiple devices working in concert. Evaporator expansion devices 80 and 82 are controlled by controller 550 in response to signals from an associated evaporator outlet temperature sensors (not shown) and evaporator outlet pressure sensors 85 and 87. Evaporator fans 90 draw or push air over the evaporators 40, 50 to condition the air in compartments 112 and 114. In addition to evaporator expansion devices 80 and 82, the controller 550 controls the compressor 20 motor, motors for the condenser fan 35, motors for the evaporator fans 90, and valves 27, 210, 240, 250, 72 and 73 based on information from sensors 85, 87, 99, 74, and various temperature sensors which are not shown but are conventional in the art. The connections from the controller to the various sensors and controlled elements are not shown in the figures.

Refrigerant vapor from evaporators 40, 50 is coupled to a common compressor inlet path 95 which is coupled to a compressor inlet port 98. An accumulator 23 may be located on the inlet path 95. The accumulator provides protection against liquid entering the compressor 20. The system may further include a valve immediately upstream of the accumulator (not shown) and a bypass route around the accumulator (also not shown) for the flow of refrigerant.

Refrigeration system 10 further includes a second refrigerant flow path 75 through the economizer heat exchanger 70. The second refrigerant flow path 75 is connected between the first refrigerant flow path 65 and an intermediate inlet port 22 of the compressor 20. The intermediate inlet port 22 is located at an intermediate location along a compression path between compressor inlet port 98 and compressor discharge port 99. An economizer expansion device 72 is positioned in the second refrigerant flow path 75, upstream of the economizer heat exchanger 70. The economizer expansion device 72 may be an electronic economizer expansion device controlled by controller 550. When the economizer is active, controller 550 controls economizer expansion device 72 to allow refrigerant to pass through the second refrigerant flow path 75, through economizer heat exchanger 70 and to the intermediate inlet port 22. The economizer expansion device 72 serves to expand and cool the refrigerant, which proceeds into the economizer counterflow heat exchanger 70, thereby sub-cooling the liquid refrigerant in the first refrigerant flow path 65 proceeding to evaporator expansion devices 80.

Refrigeration system 10 also includes a hot gas flow path 200 which has an inlet from flow path 25 intermediate to the compressor 20 and valve 27 and extends to the cooling circuit between evaporator expansion devices 80, 82 and the inlets of the respective evaporators 40, 50. As shown in the Figures, the hot gas flow path 200 may include contact with the drain pan of one or more of the evaporators 40, 50 in order to thaw any frozen condensate. Proportional valve 210 is positioned in hot gas flow path 200 upstream of valves 240 and 220. Valve 240 is associated with evaporator 40 and valve 250 is associated with evaporator 50. Proportional valve 210 may be any type of proportional valve. A proportional valve is one that can be opened incrementally (i.e., for a percentage of the total). The proportional valve may include a stepper motor which opens the valve the desired amount. Exemplary valve types include needle and seat. The stepper motor may be controlled by controller 550.

Hot gas flow path 200 allows for better temperature control of a multi-compartment transport refrigeration system 10 and more efficient compressor energy usage. By placing proportional valve 210 in hot gas flow path 200 the transport refrigeration system can simultaneously cool two compartments, simultaneously heat and cool different compartments, and simultaneously heat or defrost both compartments. For example, when cooling is needed in both compartments, proportional valve 210 is closed which prevents hot gas from flowing through hot gas path 200 and valve 27 is open. When cooling is needed in a first compartment and heating (or defrosting of the evaporator) is needed in a second compartment then proportional valve 210 is opened the desired amount which allows a portion of the hot gas to be diverted to the evaporator associated with the second compartment while still providing refrigerant to the heat rejection heat exchanger and the remainder of the cooling circuit. Defrosting may be initiated in response to detection of icing on an evaporator. Heating may be initiated after detection of an air temperature lower than a setpoint. The air temperature and set point may be associated with the temperature of air in a refrigerated compartment or the temperature of intake air at the compressor. Either valve 240 or 250 is closed to prevent the hot gas from entering the evaporator associated with the compartment being cooled.

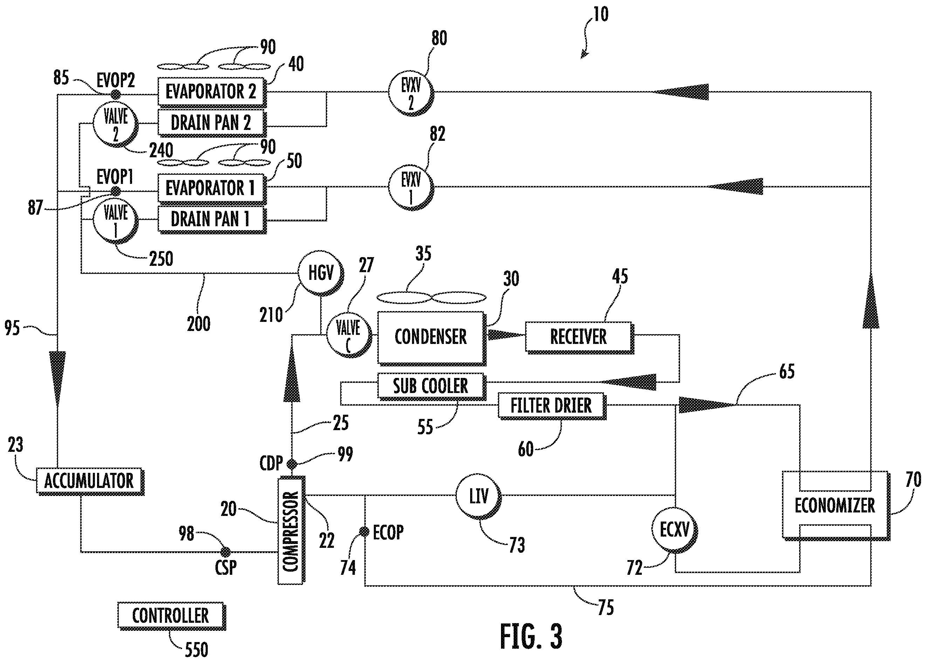

Turning now to FIG. 3, the flow of refrigerant when proportional valve 210 is closed and both compartments are cooling is shown. No coolant flows through hot gas flow path 200 (as indicated by the absence of arrows indicating flow).

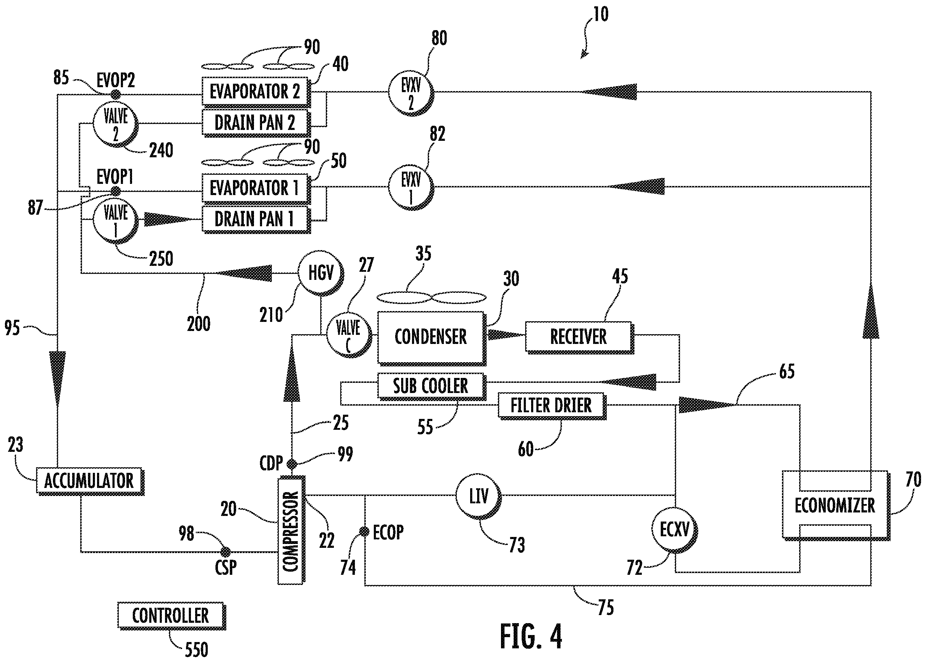

FIG. 4 shows when proportional valve 210 is open to heat one compartment or defrost one evaporator. Valves 27 and 250 are open. Evaporator valve 240 and evaporative expansion device 80 are closed. The flow of coolant in the flow path 65 and hot gas flow path 200 is shown. While a hot gas flow to only evaporator 50 is shown, a person of skill in the art will readily appreciate that with valves 27 and 240 open, valve 250 closed, and evaporative expansion device 82 closed the hot gas would flow only to evaporator 40. When heating a compartment, the evaporator fan is in operation in order to move the warm air to the compartment. During defrosting the fan associated with that evaporator is preferably not in operation unless heating is also desired.

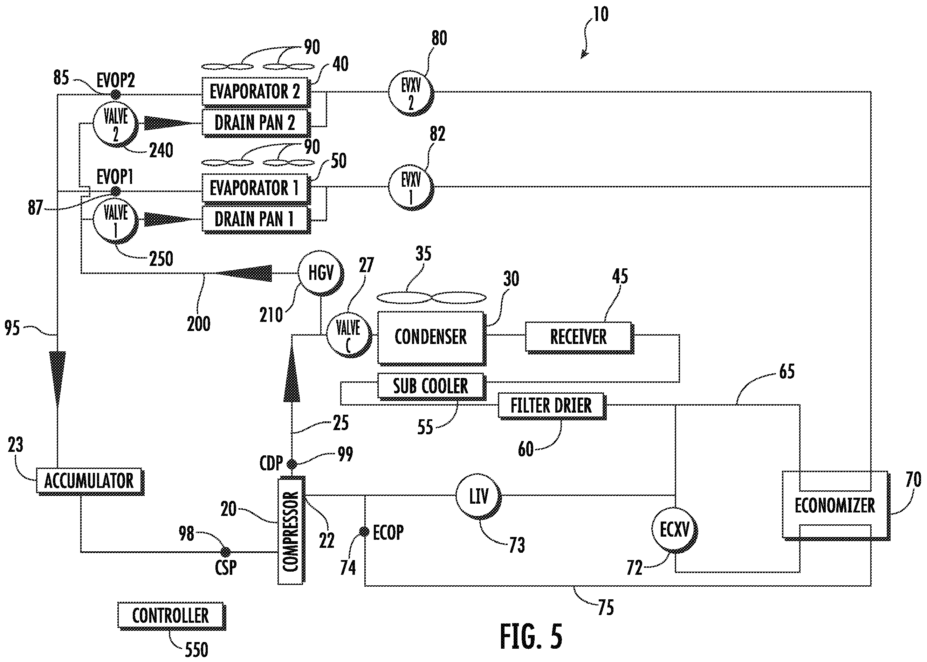

FIG 5 shows when the proportional valve 210 is open to heat both compartments or defrost both evaporators. Valve 27 is closed, proportional valve 210 as well as valves 240 and 250 are open, sending hot gas into evaporators 40 and 50. Evaporative expansion devices 80 and 82 are closed.

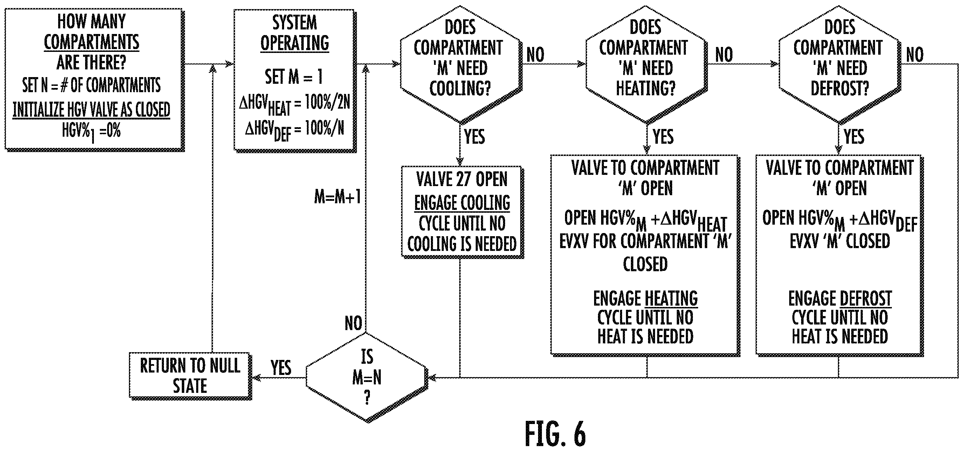

FIG. 6 shows operational logic that can be used to determine the positions of valves 27, 240 and 250 as well as proportional valve 210. The operational logic has been generalized to a generic number of compartments (N). The amount of opening of the proportional valve for heating is estimated to be 100%/2*the number of compartments. The amount of opening of the proportional valve for defrosting each evaporator is estimated to be 100%/number of compartments. The percentage opening for each compartment/evaporator is added to arrive at the total percentage of opening for the proportional valve. In situations in which no compartments are cooling the proportional valve 210 may be fully open and valve 27 closed. If any of the compartments are cooling, then valve 27 remains open.

Table 1 shows exemplary opening percentages for proportional valve 210 in a twocompartment system.

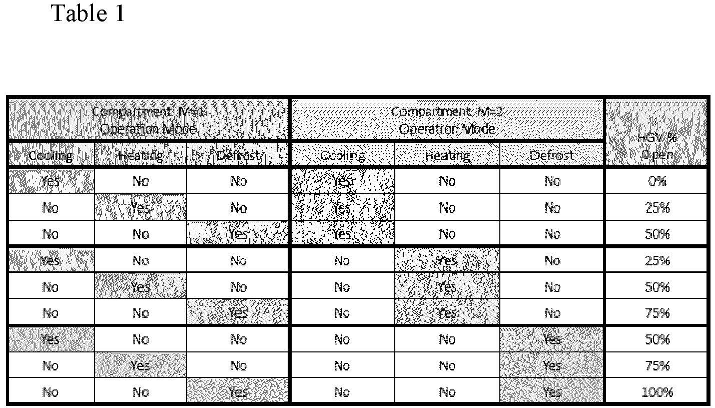

Table 2 shows exemplary opening percentages for proportional valve 210 in a threecompartment system.

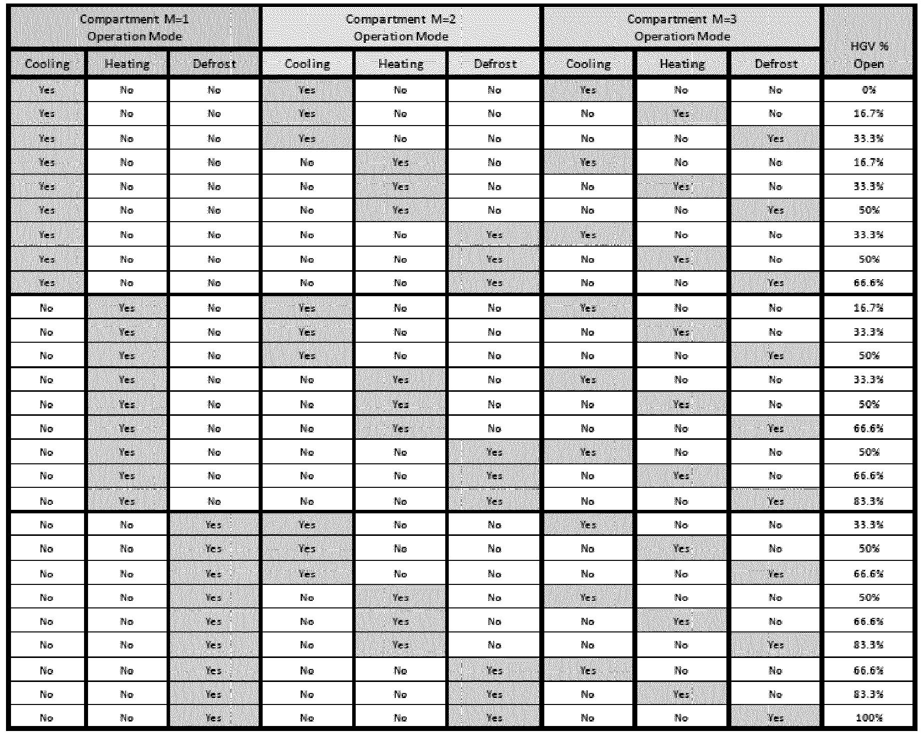

These amounts are exemplary, and the actual amounts can be varied. For example, the inner diameter of the tubing for the hot gas flow path would be understood to affect the amount of hot gas being delivered to the evaporators which in turn would affect the percentage opening by proportional valve 210. For example, the relative sizes of the evaporators may be taken into account as a larger evaporator may require a higher percentage of the total hot gas flow and the tubing inner diameter used in the hot gas flow path varied accordingly with a corresponding adjustment of the percentage opening of the proportional valve 210. These aspects of the system design are well within the skill of a person of ordinary skill in the art.

As described above, many of the points in the refrigerant vapor compression system 10 are monitored and controlled by a controller 550. In particular, controller 550 is configured to control the amount of opening of proportional valve 210, the open or closed position of valves 27, 240, and 250, and the amount of opening of valves 80 and 82 based on the temperature of each compartment relative to the setpoint for the respective compartments as well as the need for defrosting.

Controller 550 may include a microprocessor and its associated memory. The memory of controller can contain operator or owner preselected, desired values for various operating parameters within the system 10 including, but not limited to, temperature set points for various locations within the system 10 or the container, pressure limits, current limits, engine speed limits, and any variety of other desired operating parameters or limits with the system 10. In an embodiment, controller 550 includes a microprocessor board that contains microprocessor and memory, an input/output (I/O) board, which contains an analog to digital converter which receives temperature inputs and pressure inputs from various points in the system, AC current inputs, DC current inputs, voltage inputs and humidity level inputs. In addition, I/O board includes drive circuits or field effect transistors ("FETs") and relays which receive signals or current from the controller 550 and in turn control various external or peripheral devices in the system 10, such as proportional valve 210, valve 27, valve 87 and valve 85, for example.

While the invention has been described in detail in connection with only a limited number of embodiments, it should be readily understood that the invention is not limited to such disclosed embodiments. Rather, the invention can be modified to incorporate any number of variations, alterations, substitutions, or equivalent arrangements not heretofore described, but which are commensurate with the scope of the invention. Additionally, while various embodiments of the invention have been described, it is to be understood that aspects of the invention may include only some of the described embodiments. Accordingly, the invention is not to be seen as limited by the foregoing description but is only limited by the scope of the appended claims.

## Claims

1. A multi-compartment transport refrigeration system (10) comprising:
a cooling circuit comprising
a compressor (20) having an inlet port (98) and a discharge port (99);
a heat rejection heat exchanger valve (27) downstream of the compressor discharge port (99);
a heat rejection heat exchanger (30) downstream of the heat rejection heat exchanger valve (27);
a first evaporator expansion device (80) downstream of the heat rejection heat exchanger (30);
a first evaporator (40) having an inlet coupled to the first evaporator expansion device (80) and an outlet coupled to a compressor inlet path (95), the compressor inlet path coupled to the compressor inlet port (98);
a second evaporator expansion device (82) downstream of the heat rejection heat exchanger (30); and
a second evaporator (50) having an inlet coupled to the second evaporator expansion device (82) and an outlet coupled to the compressor inlet path (95); and
a hot gas flow path (200) comprising
an inlet located on the cooling circuit between the compressor (20) and the heat rejection heat exchanger valve (27);
a first outlet located between the first evaporator expansion device (80) and the first evaporator (40) inlet;
a second outlet located between the second evaporator expansion device (82) and the second evaporator (50) inlet;
a proportional valve (210) downstream of the hot gas flow path inlet;
a first evaporator valve (240) located downstream of the proportional valve (210);
a first drain pan inlet located downstream of the first evaporator valve (240) and upstream relative to the first outlet;
a second evaporator valve (250) located downstream of the proportional valve (210); and
a second drain pan inlet located downstream of the second evaporator valve (250) and upstream relative to the second outlet.

2. The multi-compartment transport refrigeration system of claim 1 further comprising:
a controller (550) configured to control the heat rejection heat exchanger valve (27), the proportional valve (210), the first evaporator valve (240), the second evaporator valve (250), the first evaporator expansion device (80), and the second evaporator expansion device (82) to regulate hot gas flow to the first evaporator (40) and the second evaporator (50).

3. The multi-compartment transport refrigeration system of claim 2 wherein:
the controller (550) is configured to control opening the proportional valve (210) to an amount less than 100% in response to an operating parameter of the refrigeration system.

4. The multi-compartment transport refrigeration system of claim 2 or 3 wherein:
the controller (550) is configured to control the amount of opening of the proportional valve (210) in response to icing on the first evaporator (40), the second evaporator (50), or both.

5. The multi-compartment transport refrigeration system of any of claims 2 to 4 wherein:
the controller (550) is configured to control the amount of opening of the proportional valve (210) in response to a temperature lower than a set point in a first compartment (112).

6. The multi-compartment transport refrigeration system of any of claims 2 to 5 wherein:
the controller (550) is configured to regulate hot gas flow to provide defrosting to the first evaporator (50) associated with a first compartment (112) and cooling to a second compartment (114) associated with the second evaporator (50).

7. The multi-compartment transport refrigeration system of any of claims 2 to 6 wherein:
the controller (550) is configured to regulate hot gas flow to provide heat to a first compartment (112) and cooling to a second compartment (114).

8. The multi-compartment transport refrigeration system of any of claims 2 to 7 wherein:
the controller (550) is configured to regulate hot gas flow to provide heat to a first compartment (112) and defrosting to the second evaporator (50) associated with a second compartment (114).

9. The multi-compartment transport refrigeration system of any of claims 2 to 8 wherein:
the controller is configured to regulate hot gas flow to provide defrosting to a first evaporator (40) associated with a first compartment (112) and defrosting to a second evaporator (50) associated with a second compartment (114).

10. The multi-compartment transport refrigeration system of any preceding claim wherein: the hot gas flow path (200) contacts a drain pan associated with the first evaporator (40), the drain pan associated with the second evaporator (50), or contacts both drain pans.

11. A method of providing a hot gas flow to a single evaporator (40; 50) in a multiple evaporator refrigeration system comprising
opening a proportional valve (210) in an amount less than 100% to allow a portion of a total hot gas amount to enter a hot gas flow path (200);
closing an evaporative expansion device (80; 82) associated with the single evaporator (40; 50);
opening a valve along the hot gas flow path (200) that permits flow of the hot gas to the single evaporator (40; 50) and closing any valves along the hot gas flow path that lead to other evaporators.

12. The method of claim 11, wherein the amount less than 100% is an amount sufficient to defrost the single evaporator (40; 50) and the method further comprises halting operation of a fan (90) associated with the single evaporator.

13. The method of claim 11, wherein the amount less than 100% is an amount sufficient to heat a compartment (112; 114) associated with the single evaporator (40; 50) and the method further comprises operating a fan associated (90) with the single evaporator (40; 50).

14. The method of any of claims 11-13, wherein the other evaporators (40; 50) are operating in a cooling mode.

15. The method of any of claims 11-13, wherein the other evaporators (40; 50) are operating in a mix of cooling and defrost modes.
